Europäisches Patentamt

European Patent Office

Office européen des brevets

(11) Publication number: **0 172 959**
**A1**

# EUROPEAN PATENT APPLICATION

(21) Application number: **84305907.2**

(22) Date of filing: **29.08.84**

(51) Int. Cl.⁴: **F 16 D 3/26**

(43) Date of publication of application: **05.03.86**
**Bulletin 86/10**

(84) Designated Contracting States: **BE DE FR GB IT SE**

(71) Applicant: **KAWASAKI STEEL CORPORATION, 1-28, Kitahonmachi-Dori 1-Chome, Chuo-ku Kobe-Shi Hyogo 650 (JP)**

(72) Inventor: **Inoue, Noriaki Kawasaki Steel Corporation, Mizushima Works Mizushima-Kawasaki-Dori 1-chome, Kurashiki City (JP)**
Inventor: **Nakano, Sadanori Kawasaki Steel Corporation, Mizushima Works Mizushima-Kawasaki-Dori 1-chome, Kurashiki City (JP)**

(74) Representative: **Overbury, Richard Douglas et al, HASELTINE LAKE & CO Hazlitt House 28 Southampton Buildings Chancery Lane, London WC2A 1AT (GB)**

(54) **Slipper metal type universal coupling.**

(57) A slipper metal type universal coupling includes a spindle having a yoke formed in its inner surfaces with slipper metal grooves in opposition to each other, slipper metals having protrusions, respectively, which are fitted in the slipper metal grooves, a pin extending and connecting between the slipper metals, and a fork of a shaft fitted on the pin.

According to the invention, corners on both ends of a bottom of each the slipper metal groove are arranged outside a power transmitting portion where the slipper metal and the yoke are in contact with each other so as to form clearances between the slipper metal and the yoke outside the corners of each the slipper metal groove, thereby avoiding the stress concentrations at corners of the slipper metal grooves, which would otherwise cause cracks in the yoke of the coupling.

PRIOR ART

# SLIPPER METAL TYPE UNIVERSAL COUPLING

This invention relates to an improvement of a universal coupling having slipper metals, and more particularly to a slipper metal type universal coupling for driving a roll for a rolling mill.

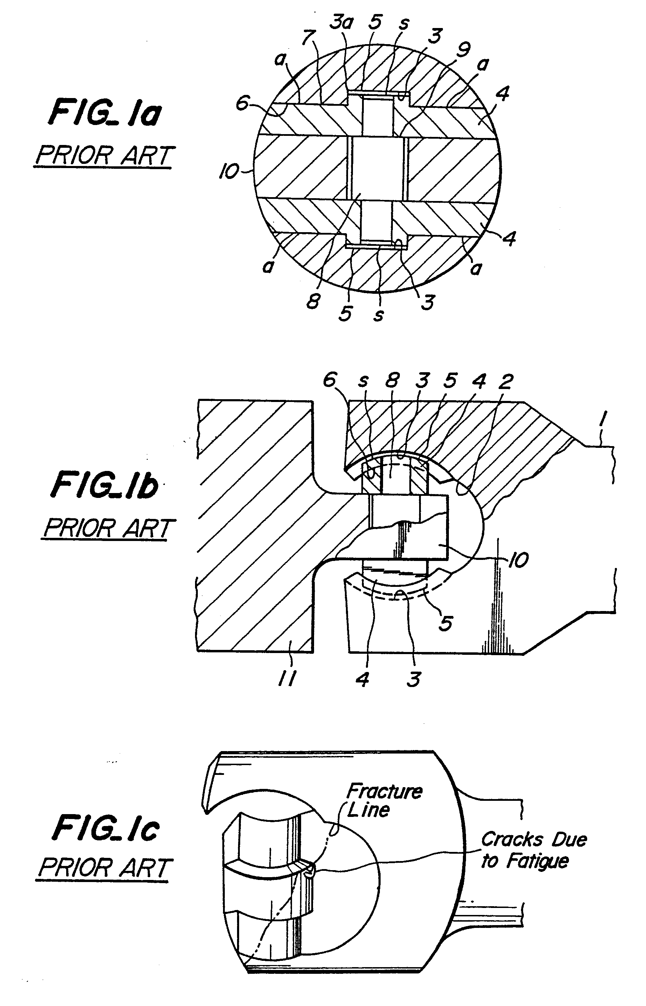

Figs. 1a and 1b illustrate a slipper metal type universal coupling hitherto used for transmitting driving power to a roll of a rolling mill. It comprises a pair of slipper metals 4 having protrusions 5, respectively, fitted in slipper metal grooves 3 formed in opposition to each other in a yoke 2 of a spindle 1 with a clearance s between a top surface of each the protrusion 5 and a bottom of each the slipper metal groove 3. Accordingly, inner side surfaces 6 of the slipper metal groove 3 of the yoke 2 are in contact with outer side surfaces 7 of the protrusion 5.

A pin 8 inserted with its reduced diameter ends into the slipper metals 4 so as to hold the slipper metals 4 in the yoke 2 by means of shoulders 9 of the pin 8. On the other hand, a fork 10 of a driven shaft 11 is fitted on the pin 8 to connect the spindle 1 with the driven shaft 11 so as to transmit the power from the spindle 1 to the driven shaft 11.

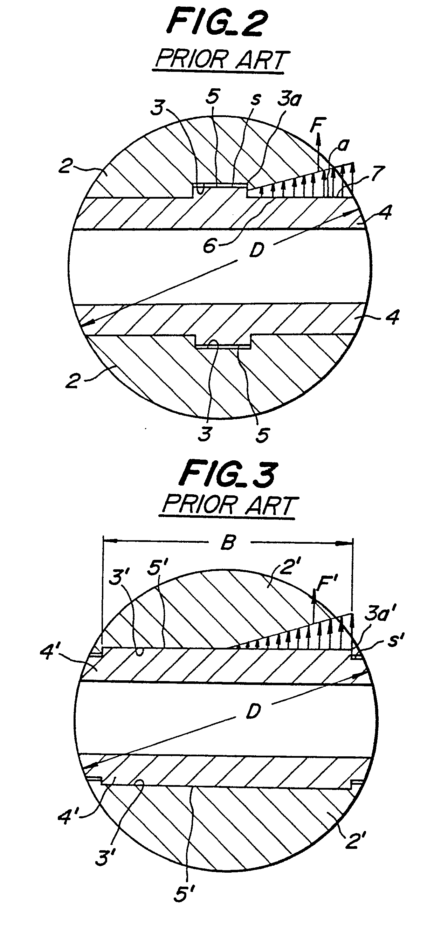

With this arrangement, however, surface pressures F act on power transmitting surfaces $a$ consisting of inner surfaces 6 of the yoke 2 outside the grooves 3 and surfaces 7 on both sides of the protrusions 5 of the slipper metals 4 as shown by arrows of a load distribution in Fig. 2. Such a load distribution gives rise to a stress concentration at a corner 3a of the slipper metal groove 3 due to a notch effect. In other words, the hitherto used universal coupling has a disadvantage of its construction in that the yoke 2 is likely to cause cracks. In fact, accidental ruptures have been often caused due to cracks at the corners 3a of the slipper metal grooves 3. However, such a problem has not been solved in spite of the user's demand for improving the strength of the spindle.

Moreover, the rolling torque has been greatly enlarged in cold rolling, controlled cooled rolling, and the like in thick plate mills, hot strip mills and the like. Particularly, peak torques at moments when materials to be rolled enter between work rolls have been greatly increased. As a result, cracks and ruptures caused thereby in mill spindles tend to occur frequently resulting in extremely short fatigue life of the mill spindles. Therefore, it has been expected to propose high strength mill spindles commensurate with the increase of the rolling torque. Fig. 1c illustrates a yoke in a perspective view ruptured due to cracks. A two-dotted line shows a fracture line.

The inventors of this application have investigated how to solve this problem in various manner. This invention resides in the discovery in the investigation that slipper metal grooves located inside the power transmitting surfaces cause the above mentioned cracks.

It is a primary object of the invention to provide an improved slipper metal type universal coupling which solves the problem in the prior art and which completely avoids cracks due to stress concentration to elongate the life of the coupling.

In order to achieve the object, the slipper metal type universal coupling including a spindle having a yoke formed in its inner surfaces with slipper metal grooves in opposition to each other, slipper metals having protrusions, respectively, which are fitted in said slipper metal grooves, a pin extending and connecting between said slipper metals, and a fork of a shaft fitted on said pin, according to the invention corners on both ends of a bottom of each said slipper metal groove are arranged outside a power transmitting portion where the slipper metal and the yoke are in contact with each other so as to form clearances between the slipper metal and the yoke outside the corners of each said slipper metal groove.

The power transmitting portion preferably extends over a major part of a length of each the slipper metal.

In a preferred embodiment of the invention, each the slipper metal is formed with only the one protrusion extending outwardly from a center portion of the slipper metal.

Each the slipper metal may be formed with two protrusions extending outwardly from both ends of the slipper metal.

The invention will be more fully understood by referring to the following detailed specification and claims taken in connection with the appended drawings.

Fig. 1a is a sectional view of a slipper metal type universal coupling of the prior art;

Fig. 1b is a side view, partially in section, of the coupling shown in Fig. 1a;

Fig. 1c is a perspective view of the coupling shown in Fig. 1a in which cracks and a fracture line occurred;

Fig. 2 illustrates a stress distribution in the coupling of the prior art;

Fig. 3 is a sectional view of a universal coupling of a preferred embodiment of the invention illustrating a stress distribution;

Fig. 4 illustrates an arrangement of strain gages on the coupling of the prior art used in an experiment;

Fig. 5 illustrates an arrangement of strain gages on the coupling according to the invention used in the experiment;

Fig. 6 is an explanatory view of an arrangement of three-dimensional strain gages;

Fig. 7 is an explanatory view of a section for testing strength of couplings in theoretical calculation in strength of materials;

Fig. 8 is a graph comparatively illustrating stresses in the couplings of the present invention and the prior art;

Figs. 9a and 9b and 10a and 10b illustrate arrangements of strain gages in an experiment; and

Fig. 11 is a sectional view of a coupling of another embodiment of the invention.

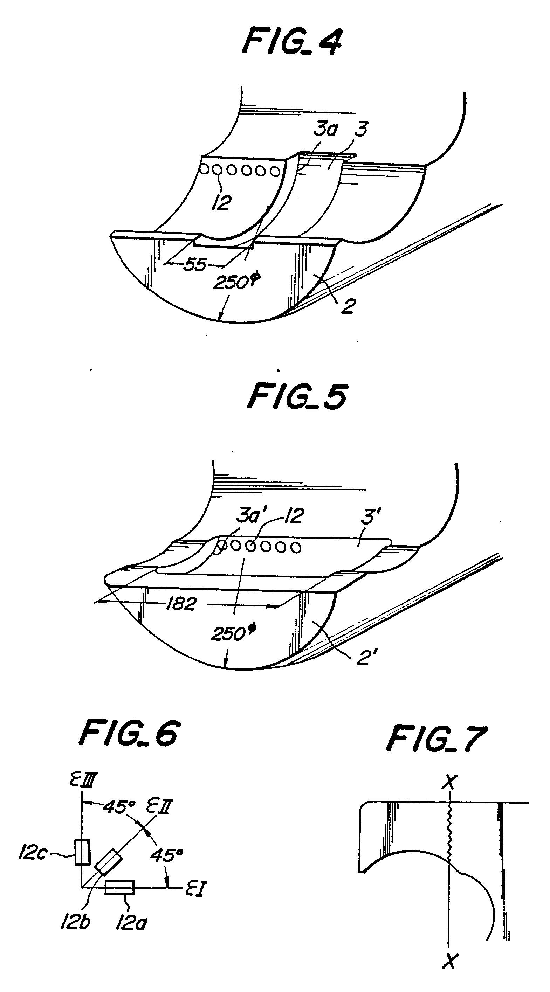

Fig. 3 illustrates a preferred embodiment of the slipper metal type universal coupling according to the invention. As shown in Fig. 3, different from the arrangement of the prior art, a width of slipper metal grooves 3' of a yoke 2' is particularly enlarged as shown by B and a width of the protrusions 5' of a slipper metal 4' is also enlarged correspondingly to the width of the slipper metal grooves 3'. On the other hand, top surfaces of the protrusions 5' of the slipper metal 4' are brought into intimate contact with bottom surfaces of the slipper metal grooves 3' without a clearance therebetween, and the slipper metals 4' and the yoke 2' outside corners 3'a of the slipper metal grooves 3 thereof form clearances s' therebetween.

Moreover, a width B of the fitted portions of the slipper metal grooves and the protrusions 5' of the slipper metals 4' is preferably of the order of twice the power transmitting surface $a$ of the prior art as shown in Fig. 2.

As the corners 3'a of the slipper metal grooves 3' are located outside the power transmitting surfaces $\underline{a}$ for transmitting the driving torque according to the invention, the corners 3'a of the slipper metal grooves 3' are free from any bending stresses so that any stress concentration does not occur and therefore any crack does not occur at the corners 3'a.

The inventors have made an experiment on stresses acting on the prior art coupling as shown in Fig. 2 and the coupling according to the invention as shown in Fig. 3. As shown in Figs. 4 and 5 illustrating arrangements of three-dimensional strain gages 12, the prior art coupling had an outer diameter of 250 mm and a slipper metal groove width of 55 mm and the coupling according to the invention had an outer diameter of 250 mm and a slipper metal groove width of 182 mm.

As shown in Fig. 6, the three-dimensional strain gages 12a, 12b and 12c were arranged at 45° between 12a and 12b and 12b and 12c. Actually measured values by the strain gages 12a, 12b and 12c are $\varepsilon_I$, $\varepsilon_{II}$ and $\varepsilon_{III}$, respectively.

Before measuring the stresses, the inventors ascertained characteristics of stress distributions in yokes by means of a stress coat. In the experiment, crack patterns were recognized at the slipper metal grooves 3 of the prior art coupling, but crack patterns did not occur in the corners of the grooves of the coupling according to the invention.  It was ascertained that the coupling according to the invention was of higher strength than the prior art coupling, although it was a qualitative analysis.

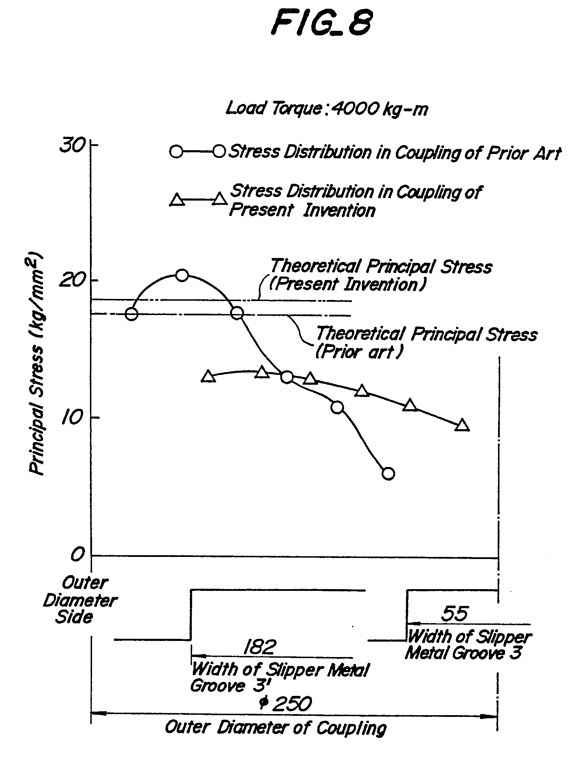

Thereafter, the prior art coupling as shown in Fig. 4 and the coupling according to the invention were subjected to a load torque of 4,000 kgf-m to measure three-dimensional stresses $\varepsilon_I$, $\varepsilon_{II}$ and $\varepsilon_{III}$ by means of the above three-dimensional strain gages 12. The measured values $\varepsilon_I$, $\varepsilon_{II}$ and $\varepsilon_{III}$ were substituted into the following principal stress equation (1) to obtain principal stresses $\sigma$.  The strengths of the couplings of the prior art and the present invention were quantitatively judged according to the obtained principal stresses.  The results are shown in Fig. 8.

$$\sigma = (\frac{\varepsilon_I + \varepsilon_{II}}{2} + \frac{\sqrt{2}}{2}A)E \qquad \ldots \quad (1)$$

where A is $(\varepsilon_I - \varepsilon_{II})^2 + (\varepsilon_{II} - \varepsilon_{III})^2$ and E is Young's modulus.

The strength of couplings can be estimated by calculated principal stresses according to a general equation (2).

$$\sigma = \frac{1}{2}\sigma_1 + \frac{1}{2}\sqrt{\sigma_1{}^2 + 4(\tau_s - \tau_T)^2} \qquad \ldots \quad (2)$$

where $\sigma_1$ is calculated bending stress, $\tau_s$ is calculated simple shearing stress and $\tau_T$ is calculated twisting shearing stress.

In this case, a section to be examined is an X-X section of the yoke adjacent to an end of a slipper metal as shown in Fig. 7, because a maximum principal stress acts upon the X-X section. The three-dimensional strain gages 12 were attached coincidentally with the X-X section.

Upon applying the load torque of 4,000 kgf-m to the couplings of the prior art shown in Fig. 4 and of the present invention shown in Fig. 5, the principal stresses $\sigma$ acting upon the X-X sections were obtained by the use of the above equation (2), such theoretical principal stresses being shown in Fig. 8.

Referring to Fig. 8, actually measured stresses in the coupling of the prior art are more than the theoretical principal stress of the prior art coupling shown in a one-dotted line. It is clearly evident that the strength of the coupling of the prior art has been overestimated. On the other hand, the actually measured stresses in the coupling according to the invention are less than the theoretical principal stress shown in a two-dotted line. The strength of the coupling according to the invention has been underestimated. In comparison of the actually measured stresses in the coupling of the present invention with those of the prior art, moreover, it is clear that the coupling according to the invention remarkably reduce the stresses caused in the coupling when a load torque is applied thereto. In other words, the coupling according to the invention can improve its strength to resist to a load acting thereon.

In Fig. 8, moreover, the actually measured stresses in the coupling according to the invention on its center side are more than those in the coupling of the prior art as shown on right side of the drawing. This probably results from the fact that the load distribution in the coupling according to the invention extends to its center longer than that of the prior art as shown in Figs. 3 and 2, so that the resultant force F' is nearer to the center than that F of the prior art. Furthermore, the actually measured stresses in the coupling according to the invention on its outer diameter side is less than those in the coupling of the prior art. This probably results from the fact that as above described the resultant force F' in the coupling of the present invention is nearer to its center so as to increase the actually measured stresses in the center than those in the coupling of the prior art, with the result that the actually measured stresses in the coupling of the invention on its outer diameter side are relatively low to those in the coupling of the prior art.

In this manner according to the invention, the corners of the slipper metal grooves are located outside power transmitting surfaces to prevent cracks in the coupling due to the stress concentration and moreover to reduce the maximum stresses acting upon the yoke of the coupling so as to improve its strength.

In the coupling of the prior art, moreover, it is considered that in order to prevent the cracks due to the stress concentration at corners in slipper metal grooves, radii of the corners are enlarged in a manner the corners extend into the wall of the yoke so as to avoid pressure receiving areas of slipper metals from decreasing.

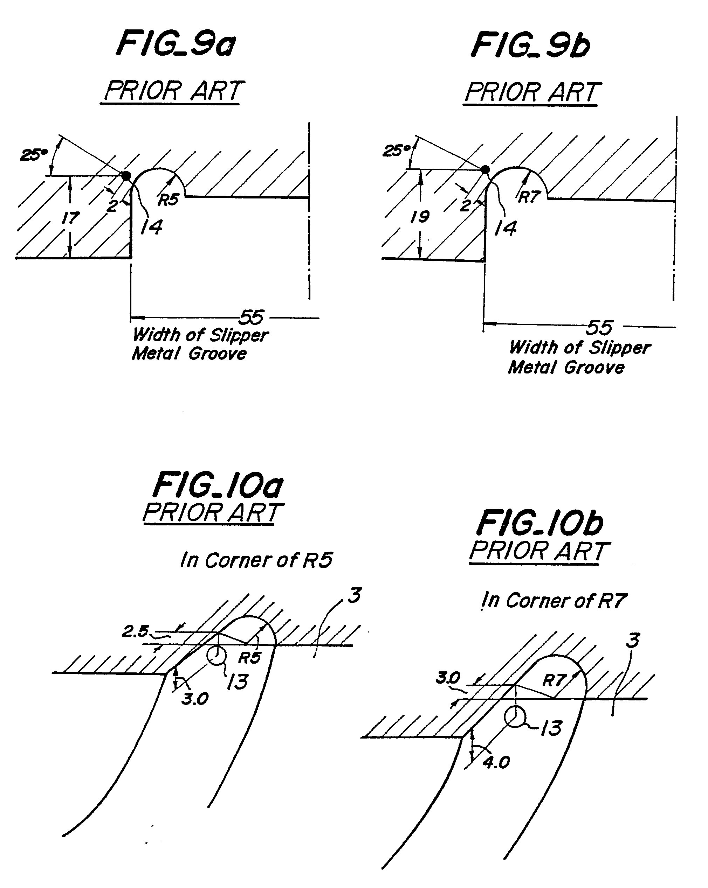

Under such a consideration, the couplings of the prior art were formed with corners of slipper metal grooves having radii of R=5 mm and R=7 mm and subjected to the load torque of 4,000 kgf-m in the same manner as the above experiment. Principal stresses in the corners were measured by strain gages 13 as shown in Fig. 10 and tensile stresses in the proximity of the corners were measured by one-dimensional strain gages 14 as shown in Fig. 9. As the result, the principal stress was 32.5 $kgf/mm^2$ and the tensile stress was 20.5 $kgf/mm^2$ in the coupling of R=5 mm, and the principal stress was 31.8 $kgf/mm^2$ and the tensile stress was 22 $kgf/mm^2$ in the coupling of R=7 mm. As can be seen from the result, as the radii of the corners increase, the principal stress decreases certainly but the decrease is very slight as 32.5-31.8=0.7 $kgf/mm^2$. On the other hand, as the radii of the corners increase, the tensile stresses increase because of lower strength due to reduced wall thickness. Accordingly, the increase of the radii of the corners is limited. It is therefore difficult to avoid the stress concentration at the corners to a great extent by changing the radii of the corners.

In contrast herewith, the coupling according to the invention can avoid the stress concentration and therefore need not consider the size of radii. Actually measured tensile stress in the proximity of the corners of the coupling according to the invention under the load torque of 4,000 kgf-m, was 14 kg/mm$^2$ which was much lower than 20.5-22 kg/mm$^2$ in the coupling of the prior art under the same load condition. Accordingly, the coupling according to the invention is effective and advantageous in avoiding cracks due to stress concentrations in comparison with that of the prior art.

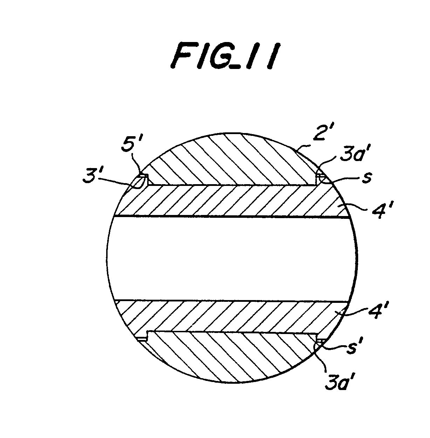

In the above embodiment, the protrusion 5' extends outwardly from the center portion of the slipper metal 4'. As shown in Fig. 11, however, protrusions 5' may extend outwardly at both the ends of the slipper metal 4'.

As can be seen from the above description, the present invention can effectively avoid cracks and ruptures due thereto often caused in yokes of universal couplings used in driving systems of rolling mills, thereby greatly improving the durability of the couplings.

While the invention has been particularly shown and described with reference to preferred embodi-

0172959

ments thereof, it will be understood by those skilled in the art that the foregoing and other changes in form and details can be made therein without departing from the spirit and scope of the invention.

Claims

1.   A slipper metal type universal coupling including a spindle having a yoke formed in its inner surfaces with slipper metal grooves in opposition to each other, slipper metals having protrusions, respectively, which are fitted in said slipper metal grooves, a pin extending and connecting between said slipper metals, and a fork of a shaft fitted on said pin, wherein corners on both ends of a bottom of each said slipper metal groove are arranged outside a power transmitting portion where the slipper metal and the yoke are in contact with each other so as to form clearances between the slipper metal and the yoke outside the corners of each said slipper metal groove.

2.   A slipper metal type universal coupling as set forth in claim 1, wherein the power transmitting portion extends over a major part of a length of each the slipper metal.

3.   A slipper metal type universal coupling as set forth in claim 1, wherein each said slipper metal is formed with only the one protrusion extending outwardly from a center portion of the slipper metal.

4.   A slipper metal type universal coupling as set forth in claim 1, wherein each said slipper metal is formed with two said protrusions extending outwardly from both ends of said slipper metal.

**FIG. 1a**
_PRIOR ART_

**FIG. 1b**
_PRIOR ART_

**FIG. 1c**
_PRIOR ART_

Fracture Line

Cracks Due to Fatigue

0172959

## FIG_2
### PRIOR ART

## FIG_4

## FIG_5

## FIG_6

## FIG_7

# FIG.8

5/6

0172959

# FIG_9a
## PRIOR ART

25°
17
2
R5
14
55
Width of Slipper
Metal Groove

# FIG_9b
## PRIOR ART

25°
19
2
R7
14
55
Width of Slipper
Metal Groove

# FIG_10a
## PRIOR ART

In Corner of R5

2.5
3
R5
13
3.0

# FIG_10b
## PRIOR ART

In Corner of R7

3.0
3
R7
13
4.0

## FIG_11

European Patent
Office

**EUROPEAN SEARCH REPORT**

0172959
Application number

EP  84 30 5907

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 427 505 (MYARD) <br> * Pages 3,4; figures 13-15 * | 1,2,4 | F 16 D  3/26 |
| X | US-A-2 740 270 (SCHNUCK) <br> * Columns 2,3; figures 3-7 * | 1-3 | |
| X | US-A-3 229 481 (DUNN) <br> * Columns 2,3; figures 6-8 * | 1-3 | |
| X | DE-C- 480 341 (SCHLOEMANN) <br> * Whole document * | 1-3 | |
| A | EP-A-0 025 403 (BENDIX CORP.) | | |
| A | US-A-3 217 515 (BENSON) | | TECHNICAL FIELDS SEARCHED (Int. Cl.4) |
| A | GB-A- 925 493 (HUETTE) | | F 16 D  3/00 |
| A | US-A-1 578 664 (INSLEE) | | |
| A | GB-A- 628 665 (SVENSKA-KUGELLAGERFABRIKEN) | | |

The present search report has been drawn up for all claims

| Place of search | Date of completion of the search | Examiner |
|---|---|---|
| THE HAGUE | 19-04-1985 | BALDWIN D.R. |